# EUROPÄISCHE PATENTSCHRIFT

(11) **EP 1 136 182 B1**
(45) Veröffentlichungstag und Bekanntmachung des Hinweises auf die Patenterteilung: **11.06.2003**
(21) Anmeldenummer: 01101409.9
(22) Anmeldetag: 23.01.2001
(51) Int. Cl.: B24B 41/02, B24B 27/00, B23Q 39/04

(54) **Zwillings-Schleifmaschine**
Twin grinding machine
Machine outil avec têtes jumelles

(30) Priorität: 07.03.2000 DE 10010368
(43) Veröffentlichungstag der Anmeldung: 26.09.2001
(73) Patentinhaber: E. Siepmann GmbH & Co. KG, 42655 Solingen (DE)
(72) Erfinder: Hoeller, Gerhard, 42699 Solingen (DE)
(74) Vertreter: Rau, Manfred, Dr. Dipl.-Ing.

(56) Entgegenhaltungen:
- EP-A- 0 046 272
- DE-A- 3 521 218
- DE-A- 4 015 570
- DE-A- 4 430 113

## Beschreibung

Die Erfindung betrifft eine Zwillings-Schleifmaschine.

Derartige unter anderem und insbesondere zum Schleifen von langgestreckten Gegenständen, wie Scherenteilen und Messern, eingesetzte Schleifmaschinen sind bekannt. Eine derartige bekannte Schleifmaschine (siehe z.B. DE 4 015 570A) weist ein Maschinen-Gestell mit einem etwa quaderförmigen Sockel und zwei in dessen Seitenbereichen von diesem nach sich oben erstreckende Ständer auf, so daß es insgesamt die Form eines U hat. An den einander zugewandten Seitenflächen der Ständer sind Schleifvorrichtungen vertikal verschiebbar angebracht. An der zwischen den Ständern befindlichen horizontalen Oberseite des Sockels sind Werkstück-Träger zur Aufnahme von zu schleifenden Werkstücken angeordnet. Der Nachteil dieser bekannten Ausgestaltung ist der große Platzaufwand.

Der Erfindung liegt die Aufgabe zugrunde, eine Zwillings-Schleifmaschine zu schaffen, bei der der erforderliche Platzaufwand minimiert wird.

Diese Aufgabe wird erfindungsgemäß durch die Merkmale des Anspruches 1 gelöst.

Durch die erfindungsgemäße Ausgestaltung ist nur ein gemeinsamer mittiger Ständer erforderlich, an dem die beiden Schleifvorrichtungen angebracht werden. Gegenüber der bekannten Lösung ist hierdurch der für die Maschine erforderliche Platzbedarf erheblich reduziert.

Durch die Ausgestaltung nach Anspruch 2 wird erreicht, daß die Maschine spiegelsymmetrisch zu einer gemeinsamen Mittel-Ebene und damit besonders einfach und übersichtlich ausgestaltet ist.

Die erfindungsgemäße Lösung ermöglicht in besonders einfacher Weise die erfinderische Weiterbildung nach Anspruch 3, wodurch in einfacher Weise sichergestellt wird, daß beim Schleifen einzusetzende Schleifflüssigkeit definiert nach außen, nämlich in Richtung zu den Seitenwänden des Sokkels abläuft. Dieser Effekt wird besonders gut in der Weiterbildung nach Anspruch 4 erreicht, wobei zusätzlich sichergestellt wird, daß exakt definierte Führungsverhältnisse gegeben sind.

Die Ansprüche 5 und 6 unterstützen die Wirkung, die durch die Merkmale der Ansprüche 3 und 4 erreicht wird.

Die Weiterbildungen nach den Ansprüchen 7 und 8 stellen sicher, daß die Schwingungen von einer Schleifvorrichtung nicht auf die andere übertragen werden.

Die Ansprüche 9 und 10 ermöglichen einen besonders übersichtlichen Aufbau der Maschine und eine einfache Zugänglichkeit.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Draufsicht auf eine Zwillings-Schleifmaschine nach der Erfindung,

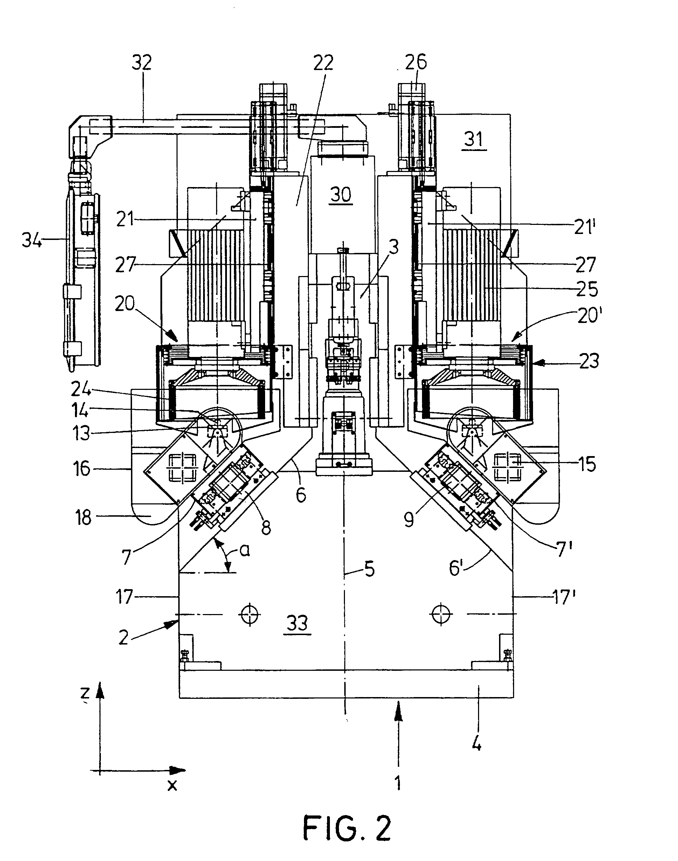

- Fig. 2: eine Vorderansicht der Zwillings-Schleifmaschine entsprechend dem Sichtpfeil II in Fig. 1 und

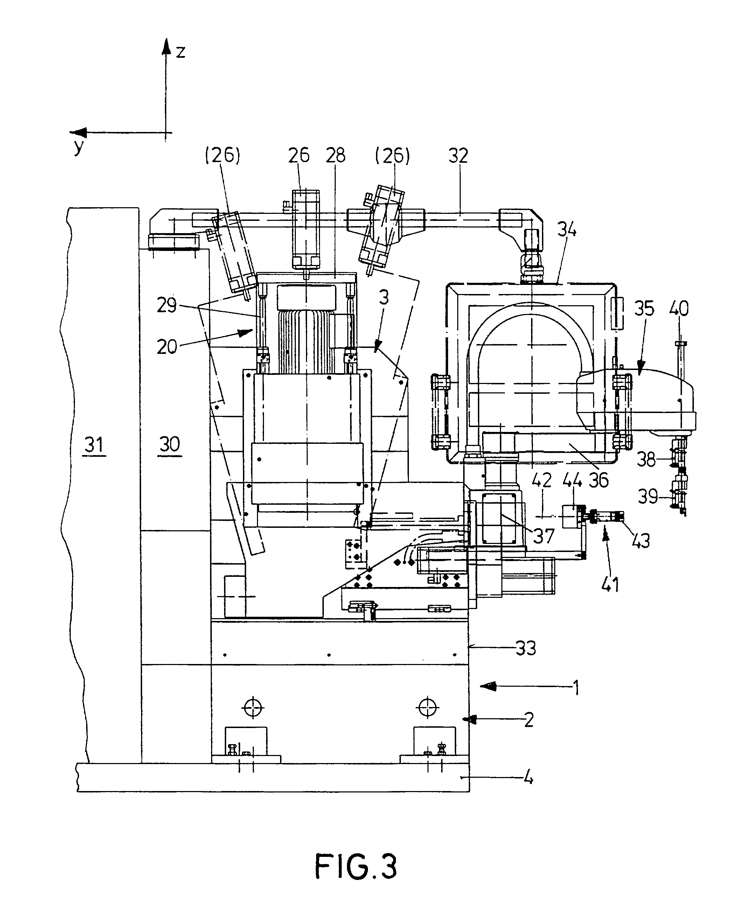

- Fig. 3: eine Seitenansicht entsprechend dem Sichtpfeil III in Fig. 1.

Bei der in der Zeichnung dargestellten Schleifmaschine handelt es sich um eine Zwillings-Schleifmaschine. Diese weist ein Maschinen-Gestell 1 auf, das im wesentlichen aus einem Sockel 2 und einem mittig auf diesem angeordneten Ständer 3 besteht. Der Ständer 3 ist vibrationsdämpfend ausgebildet und besteht beispielsweise aus Polymerbeton. Der Sockel 2 kann auf einem Fundament 4 befestigt werden. Das Maschinen-Gestell 1 ist im wesentlichen spiegelsymmetrisch zu einer vertikalen Mittel-Ebene 5 ausgebildet. Der Sockel weist zwei gegenüber einer horizontalen x-y-Ebene von der Mittel-Ebene 5 weg nach außen geneigte Oberseiten 6, 6' auf. Die Mittel-Ebene 5 entspricht einer y-z-Ebene.

Auf den Oberseiten 6, 6' sind zwei Schleif-Schlitten 7, 7' auf Führungen 8 in y-Richtung verschiebbar angeordnet. Die Führungen 8 sind an den Oberseiten 6, 6' des Sockels 2 angebracht. Die Verschiebung der Schlitten 7, 7' erfolgt mittels Servomotoren, die als Schleif-Schlitten-Antriebe 9 dienen.

Auf den Schlitten 7, 7' ist jeweils ein Werkstück-Träger 10 um eine in y-Richtung verlaufende Achse in Lagern 11, 12 schwenkbar gelagert, die auf dem jeweiligen Schlitten 7, 7' angebracht sind. Auf dem Werkstück-Träger 10 sind jeweils ein oder mehrere Spannvorrichtungen 13 für ein zu schleifendes Werkstück 14 angebracht, bei dem es sich bevorzugt um ein Messer oder Scherenteil handelt. Das Verschwenken des Trägers 10 erfolgt mittels eines auf dem Schlitten 7 bzw. 7' angebrachten als Werkstück-Schwenkantrieb 15 dienenden Servomotors.

Auf dem Schlitten 7, 7' ist jeweils weiterhin eine Auffang-Wanne 16 zum Auffangen der Schleifflüssigkeit, beispielsweise des Schleifwassers, angebracht, die den Träger 10 jeweils nach unten und seitlich vollständig umgibt. Da die Führung 8 des jeweiligen Schlittens 7, 7' in der x-z-Ebene geneigt angeordnet ist, läuft die Schleifflüssigkeit immer von der Mittel-Ebene 5 weg nach außen zu außerhalb der Seitenwände 17, 17' des Sockels 2 befindlichen Ablauf-Rinnen 18 der Wannen 16. Aufgrund der Schräganordnung der Führungen 8 haben die Schlitten 7, 7' auf ihrer jeweiligen Führung 8 immer eine definierte Führungsanlage, da bei von oben in z-Richtung auf ein Werkstück 14 ausgeübten Schleifkräften diese Schleifkräfte in derselben Richtung wirken wie die Schwerkraft. Ein noch so geringes Flattern der Schlitten 7, 7' auf den Führungen 8 aufgrund des im Prinzip unvermeidlichen Führungsspiels ist daher ausgeschlossen. Für den Winkel a zwischen der Horizontalen, also der x-y-Ebene und den Oberseiten 6, 6' gilt 0° < a ≤ 90° und bevorzugt 30° ≤ a ≤ 60° und bevorzugt a = 45°.

An den beiden in y-z-Richtung verlaufenden, also parallel zur Mittel-Ebene 5 verlaufenden Seitenflächen 19, 19' des etwa quaderförmigen Ständers 3 sind zwei Schleifvorrichtungen 20, 20' angebracht. Sie weisen jeweils einen Schleifkopf-Schlitten 21, 21' auf, die im wesentlichen vertikal auf je einer Führung 22 verschiebbar sind, die auf der jeweiligen Seitenfläche 19 bzw. 19' angebracht ist. Die jeweiligen plattenförmig ausgebildeten Führungen 22 können auf den Seitenflächen 19 bzw. 19' um beispielsweise ± 15° verschwenkbar angebracht sein, um eine Zustellung der Schleifkopf-Schlitten 21, 21' abweichend von der Vertikalen zu ermöglichen. Diese Einstellung erfolgt von Hand und ist für bestimmte Schleifvorgänge dann unverändert.

Der jeweilige Schleifkopf-Schlitten 21, 21' trägt einen Schleifkopf 23 mit einer Topf-Schleifscheibe 24, die von einem Schleif-Antriebsmotor 25 direkt angetrieben wird. Der Schleifkopf-Schlitten 21 bzw. 21' wird von einem als Schleifkopf-Zustellantrieb 26 dienenden Servomotor über einen Spindeltrieb 27 angetrieben. Der Zustellantrieb 26 ist mittels einer Halterung 28 an der Oberseite der in Form einer Platte ausgebildeten Führung 22 angebracht. An dieser Halterung 28 sind auch für jeden Schlitten 21, 21' zwei als pneumatisch beaufschlagbare Kolben-Zylinder-Antriebe ausgebildete Gewichts-Ausgleichs-Einrichtungen 29 angebracht, die mit ihren unteren Enden am Schlitten 21 bzw. 21' befestigt sind. Durch diese Einrichtung 29 wird das Gesamtgewicht der jeweiligen Schleifvorrichtung 20, 20' kompensiert, so daß mittels der Zustellantriebe 26 mit Spindelantrieb 27 nur geringe Verstellkräfte in der Vertikalen aufzubringen sind. Die Einrichtungen 29 können auch als sogenannte Gasfedern ausgebildet sein.

An der Rückseite des Maschinengestells 1 ist ein quaderförmiges Zwischenteil 30 angeordnet, hinter dem ein Versorgungs-Schrank 31 angeordnet ist, in dem die elektrischen Versorgungseinrichtungen, die Steuerung und dergleichen untergebracht sind. Auf dem den Ständer 3 nach oben überragenden Zwischenteil 30 ist ein schwenkbarer Haltearm 32 angebracht, der um eine in z-Richtung verlaufende Achse in einer x-y-Ebene verschwenkbar ist. Er überragt das Maschinen-Gestell 1 über dessen Vorderseite 33 hinaus. An seinem freien Ende ist eine Bedienungseinheit 34 angebracht, die selbst wiederum um eine vertikale Achse schwenkbar am Haltearm 32 angebracht ist, so daß sie rund um die Vorderseite 33 und die Seitenwände 17, 17' herum geschwenkt und dort selbst wieder in eine gut zugängliche Stellung verschwenkt werden kann.

An der Vorderseite 33 des Sockels 3 ist weiterhin eine Werkstück-Handhabungseinheit 35, also ein Roboter, angebracht, der einen Schwenkarm 36 aufweist, der um eine in z-Richtung verlaufende vertikale Achse 37, die in der Mittel-Ebene 5 und im Bereich der Vorderseite 33 angeordnet ist, verschwenkbar ist und zwar gegenüber der Mittel-Ebene 5 um einen Winkel b von etwa 110 bis 120° zu jedem Schleif-Schlitten 7, 7' hin. Am der Achse 37 abgewandten freien Ende des Schwenkarmes 36 sind an diesem zwei Greifer 38, 39 angebracht, die mittels eines beispielsweise als pneumatisch beaufschlagbarer Kolben-Zylinder-Antrieb ausgebildeten Greiferantriebes 40 verschiebbar sind. Ebenfalls in der Mittel-Ebene 5 und gegenüber der Vorderseite 33 vorspringend ist eine Wendeeinrichtung 41 am Sockel 2 angebracht, in der Werkstücke 14 um eine in y-Richtung verlaufende Achse 42 um 180° gedreht werden können. Hierzu weist die Wendeeinrichtung 41 einen Halter 43 zur Aufnahme eines Werkstückes 14 und einen Schwenkantrieb 44 auf.

Alle Antriebe, also die Schleif-Schlitten-Antriebe 9, die Werkstück-Schwenkantriebe 15, die Schleif-Antriebsmotoren 25, die Schleifkopf-Zustellantriebe 26, der Greiferantrieb 40 und der Schwenkantrieb 44 werden mittels einer im Schrank 31 untergebrachten CNC-Steuerung gesteuert, wobei die notwendigen Bedienungsvorgänge über die Bedienungseinheit 34 erfolgen.

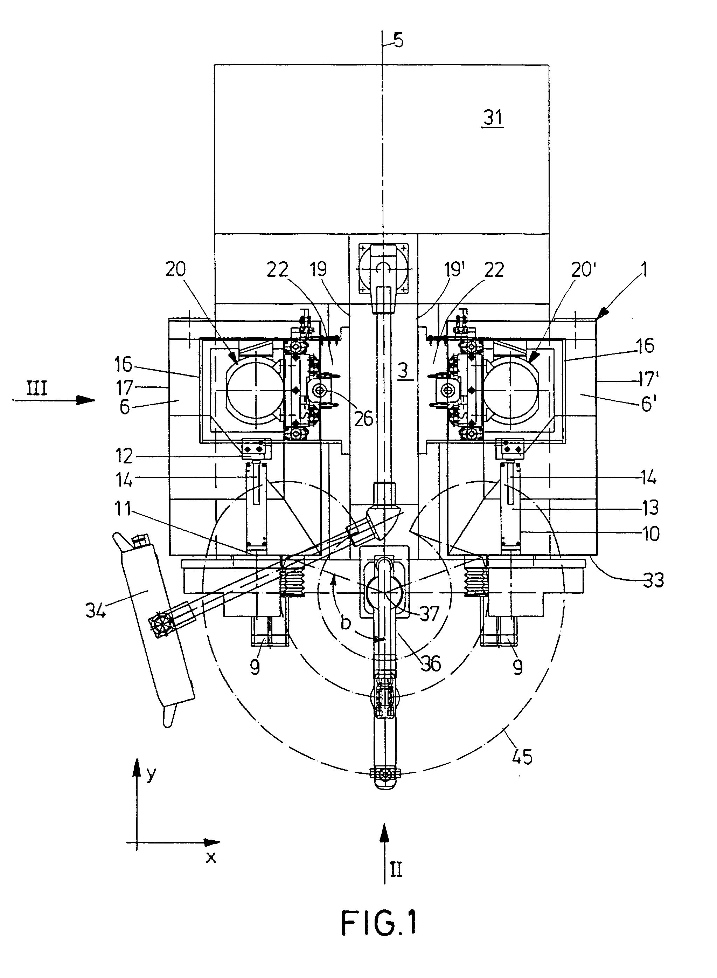

Die Beschickung der Spannvorrichtungen 13 mit jeweils einem Werkstück 14 erfolgt dann, wenn der jeweilige Schleif-Schlitten 7 bzw. 7' aus einer hinteren Arbeitsstellung zur Vorderseite 33 des Sockels 2 in eine Beschikkungs- und Entnahmestellung verfahren ist, wie es in Fig. 1 dargestellt ist. In dieser Beschickungs- und Entnahmestellung ist der Werkstück-Träger 10 mit der Spannvorrichtung 13 und dem Werkstück 14 frei von der im hinteren Bereich, vor dem Zwischenteil 30 jeweils angeordneten Schleifvorrichtung 20 bzw. 21'. Die Schleifvorrichtung 20 bzw. 20' ist jeweils nach oben verfahren, so daß das Werkstück 14 frei von der Schleifscheibe 24 verfahren werden kann. Das Umsetzen von Werkstücken 13 von einem Schleif-Schlitten 7 auf den anderen Schleif-Schlitten 7' zum Schleifen einer anderen Fläche des Werkstückes erfolgt mittels der Handhabungseinheit 35 innerhalb eines Arbeitsbereiches 45, der in Fig. 1 mit strichpunktierten Linien umgrenzt ist. Die Handhabungseinheit 35 kann auch zum erstmaligen Beschicken und zum endgültigen Entnehmen eines Werkstükkes 14 eingesetzt werden.

## Patentansprüche

1. Zwillings-Schleifmaschine,
- mit einem Maschinen-Gestell (1), daß
-- einen Sockel (2),
-- einen sich etwa mittig vom Sockel (2) nach oben erstreckenden Ständer (3) mit zwei sich vertikal erstreckenden Seitenflächen (19, 19') und
-- beidseitig der Seitenflächen (19, 19') des Ständers (3) je eine Oberseite (6, 6') des Sockels (2) aufweist,
- mit je einem auf jeder Oberseite (6, 6') angeordneten Schleif-Schlitten (7, 7') der
-- in einer ersten Richtung (y-Richtung) verschiebbar ausgebildet ist und
-- einen Werkstück-Träger (10) zur Aufnahme eines zu schleifenden Werkstückes (14) trägt,
und
- mit je einer Schleifvorrichtung (20, 20'), die
-- einander abgewandt an je einer Seitenfläche (19, 19') des Ständers (3) oberhalb je einer der Oberseiten (6, 6') angeordnet ist,
-- an ihrer dem jeweiligen Schleif-Schlitten (7, 7') zugewandten Seite eine drehantreibbare Schleifscheibe (24) aufweist und
-- in eine zu der ersten Richtung (y-Richtung) im wesentlichen senkrechte zweite Richtung (z-Richtung) verschiebbar ist.

2. Zwillings-Schleifmaschine nach Anspruch 1, **dadurch gekennzeichnet,**
**daß** die Seitenflächen (19, 19') zueinander parallel verlaufen.

3. Zwillings-Schleifmaschine nach Anspruch 1 oder 2, **dadurch gekennzeichnet,**
**daß** die Oberseiten (6, 6') des Sockels (2) vom Ständer (3) weg und quer zur ersten Richtung (y-Richtung) nach unten geneigt ausgebildet sind.

4. Zwillings-Schleifmaschine nach einem der Ansprüche 1 bis 3, **dadurch gekennzeichnet,**
**daß** die Schleif-Schlitten (7, 7') in auf den Oberseiten (6, 6') angeordneten vom Ständer (3) weg und quer zur ersten Richtung (y-Richtung) nach unten geneigt ausgebildeten Führungen (8) verschiebbar geführt sind.

5. Zwillings-Schleifmaschine nach einem der Ansprüche 1 bis 4, **dadurch gekennzeichnet,**
**daß** auf jedem Schleif-Schlitten (7, 7') eine den jeweiligen Werkstück-Träger (10) aufnehmende Auffang-Wanne (16) für Schleifflüssigkeit angebracht ist.

6. Zwillings-Schleifmaschine nach Anspruch 5, **dadurch gekennzeichnet,**
**daß** jede Auffang-Wanne (16) eine einen tiefstliegenden Bereich bildende Ablauf-Rinne (18) aufweist.

7. Zwillings-Schleifmaschine nach einem der Ansprüche 1 bis 6, **dadurch gekennzeichnet,**
**daß** der Ständer (3) schwingungsgedämpft ausgebildet ist.

8. Zwillings-Schleifmaschine nach Anspruch 7, **dadurch gekennzeichnet,**
**daß** der Ständer (3) aus Polymerbeton gebildet ist.

9. Zwillings-Schleifmaschine nach einem der Ansprüche 1 bis 8, **dadurch gekennzeichnet,**
**daß** die Schleifvorrichtungen (20, 20') von einer Vorderseite (33) des Maschinen-Gestells (1) nach hinten versetzt angeordnet sind und daß die Schleif-Schlitten (7, 7') zwischen einer Arbeitsstellung unter den Schleifvorrichtungen (20, 20') und einer Beschickungs- und Entnahme-Stellung benachbart zur Vorderseite (33) verschiebbar sind.

10. Zwillings-Schleifmaschine nach einem der Ansprüche 1 bis 9, **dadurch gekennzeichnet,**
**daß** vor dem Ständer (3) am Sockel (2) eine Werkstück-Handhabungseinheit (35) für Werkstücke (14) angeordnet ist.

## Claims

1. Twin grinding machine comprising
- a machine frame (1), which includes
-- a base (2),
-- a stand (3) that extends upwards approximately centrally from the base (2), having two vertical lateral faces (19, 19'); and
-- a top surface (6, 6') of the base (2) on each side of the lateral faces (19, 19') of the stand (3);
- a grinding saddle (7, 7') disposed on each top surface (6, 6'),
-- which is displaceable in a first direction (y direction), and
-- which supports a work holding fixture (10) for accommodation of a work piece (14) that is to be ground;
and
- grinding attachments (20, 20'),
-- which, facing away from each other, are disposed on each lateral face (19, 19') of the stand (3) above each top surface (6, 6'),
-- which, on their side turned towards the respective grinding saddle (7, 7'), have a rotatably drivable grinding wheel (24), and
-- which are displaceable in a second direction (z direction) that is substantially perpendicular to the first direction (y direction).

2. Twin grinding machine according to claim 1, **characterized in that** the lateral faces (19, 19') run parallel to each other.

3. Twin grinding machine according to claim 1 or 2, **characterized in that** the top surfaces (6, 6') of the base (2) are designed for inclination away from the stand (3) and downwards crosswise of the first direction (y direction ).

4. Twin grinding machine according to one of claims 1 to 3, **characterized in that** the grinding saddles (7, 7') are guided for displacement in guides (8) that are disposed on the top surfaces (6, 6') and designed for inclination away from the stand (3) and downwards crosswise of the first direction (y direction).

5. Twin grinding machine according to one of claims 1 to 4, **characterized in that** an abrasive liquid collecting basin (16) is mounted on each grinding saddle (7, 7'), accommodating the respective work holding fixture (10).

6. Twin grinding machine according to claim 5, **characterized in that** each collecting basin (16) has a channel (18) which constitutes a lowermost area.

7. Twin grinding machine according to one of claims 1 to 6, **characterized in that** the stand (3) is vibration absorbent.

8. Twin grinding machine according to claim 7, **characterized in that** the stand (3) is made of concrete polymer.

9. Twin grinding machine according to one of claims 1 to 8, **characterized in that** the grinding attachments (20, 20') stand back from a face (33) of the machine frame (1); and
**in that** the grinding saddles (7, 7') are displaceable between a working position underneath the grinding attachments (20, 20') and a charging and discharging position in vicinity to the face (33).

10. Twin grinding machine according to one of claims 1 to 9, **characterized in that** a work-piece-(14)-handling unit (35) is disposed on the base (2) in front of the stand (3).

## Revendications

1. Machine à affûter à têtes jumelées,
- avec un bâti (1) de machine, comportant
-- un socle (2),
-- un montant (3) s'étendant vers le haut sensiblement à partir du milieu du socle (2), comportant deux surfaces latérales (19, 19') s'étendant verticalement, et
-- une face supérieure respective (6, 6') du socle (2) des deux côtés des surfaces latérales (19, 19') du montant (3),
- avec un coulisseau d'affûtage (7, 7') disposé sur chaque face supérieure (6, 6'),
-- qui est agencé de façon à pouvoir être déplacé dans une première direction (direction y), et
-- qui porte un support (10) de pièce destiné à recevoir une pièce (14) à affûter,
et
- avec des dispositifs d'affûtage (20, 20'), qui
-- sont disposés à l'opposé l'un de l'autre sur une surface latérale (19, 19') du montant (3) au-dessus de l'une des deux faces supérieures (6, 6'),
-- comportent au niveau de leur face opposée à chaque coulisseau d'affûtage (7, 7') un disque d'affûtage (24) pouvant être entraîné en rotation, et
-- peuvent être déplacés dans une deuxième direction (direction z) sensiblement perpendiculaire à la première direction (direction y).

2. Machine à affûter à têtes jumelées selon la revendication 1, **caractérisée en ce que**
les surfaces latérales (19, 19') s'étendent parallèlement l'une par rapport à l'autre.

3. Machine à affûter à têtes jumelées selon la revendication 1 ou 2, **caractérisée en ce que**
les faces supérieures (6, 6') du socle (2) sont agencées en s'écartant du montant (3), et sont inclinées vers le bas transversalement à la première direction (direction y).

4. Machine à affûter à têtes jumelées selon l'une quelconque des revendications 1 à 3, **caractérisée en ce que**
les coulisseaux d'affûtage (7, 7') sont guidés de façon à pouvoir être déplacés dans des guidages (8) disposés sur les faces supérieures (6, 6'), qui sont agencés en s'écartant du montant (3) et en étant inclinés vers le bas transversalement à la première direction (direction y).

5. Machine à affûter à têtes jumelées selon l'une quelconque des revendications 1 à 4, **caractérisée en ce que**,
sur chaque coulisseau d'affûtage (7, 7'), il est fixé une cuvette de réception (16) pour du liquide d'affûtage recevant chaque support (10) de pièce.

6. Machine à affûter à têtes jumelées selon la revendication 5, **caractérisée en ce que,**
dans une zone située au point le plus bas, chaque cuvette de réception (16) comporte une rigole d'écoulement (18).

7. Machine à affûter à têtes jumelées selon l'une quelconque des revendications 1 à 6, **caractérisée en ce que**
le montant (3) est réalisé de façon à amortir les vibrations.

8. Machine à affûter à têtes jumelées selon la revendication 7, **caractérisée en ce que**
le montant (3) est constitué de béton au polymère.

9. Machine à affûter à têtes jumelées selon l'une quelconque des revendications 1 à 8, **caractérisée en ce que**
les dispositifs d'affûtage (20, 20') sont disposés en étant décalés vers l'arrière par rapport à une face avant (33) du bâti (1) de machine, et **en ce que** les coulisseaux d'affûtage (7, 7') peuvent être déplacés entre une position de travail au-dessous des dispositifs d'affûtage (20, 20') et une position de chargement et de retrait adjacente à la face avant (33).

10. Machine à affûter à têtes jumelées selon l'une quelconque des revendications 1 à 9, **caractérisée en ce que**
une unité de manipulation (35) pour des pièces (14) est disposée sur le socle (2) en amont du montant (3).
